# EUROPÄISCHE PATENTSCHRIFT

(11) **EP 1 178 189 B1**
(45) Veröffentlichungstag und Bekanntmachung des Hinweises auf die Patenterteilung: **03.03.2004**
(21) Anmeldenummer: 01114060.5
(22) Anmeldetag: 08.06.2001
(51) Int. Cl.: F02B 27/02

(54) **Sauganlage**
Intake system
Système d'admission

(30) Priorität: 04.08.2000 DE 10038011
(43) Veröffentlichungstag der Anmeldung: 06.02.2002
(73) Patentinhaber: Dr.Ing. h.c.F. Porsche Aktiengesellschaft, 70435 Stuttgart (DE)
(72) Erfinder: Rutschmann, Erwin, 75233 Tiefenbronn (DE); Schweizer, Armin, 71254 Ditzingen (DE)

(56) Entgegenhaltungen:
- DE-A- 4 116 294
- DE-A- 19 814 970
- PATENT ABSTRACTS OF JAPAN vol. 015, no. 217 (M-1120), 4. Juni 1991 (1991-06-04) & JP 03 061613 A (MAZDA MOTOR CORP), 18. März 1991 (1991-03-18)

## Beschreibung

Die Erfindung bezieht sich auf eine Sauganlage mit einer Vorrichtung zur Nutzung von Resonanzeffekten für eine Brennkraftmaschine mit gegenüberliegenden Zylinderreihen nach dem Oberbegriff des Patentanspruchs 1

Aus der US-PS 4 846 117 geht eine Sauganlage mit einem Behälter hervor, in dem ein Ringkanal vorgesehen ist. Über diesen Ringkanal werden gegenüberliegende Zylinderreihen mit Ansaugluft versorgt. Der Behälter ist an eine mit einem Luftfilter versehene Zuführungseinrichtung angeschlossen.

Die DE 198 14 970 behandelt eine Sauganlage für eine Brennkraftmaschine mit einer Vorrichtung zur Nutzung von Resonanzeffekten. Diese Sauganlage weist einen Resonanzbehälter auf, in dem eine den Resonanzquerschnitt des Resonanzbehälters beeinflussbare Steuereinrichtung arbeitet. Der Resonanzbehälter ist mit zwei getrennten Zuführungsleitungen einer Zuführungseinrichtung verbunden.

Aufgabe der Erfindung ist es an einer Sauganlage mit einer Vorrichtung zur Nutzung von Resonanzeffekten solche Vorkehrungen zu treffen, dass das Drehmomentverhalten der Brennkraftmaschine über einen weiten Drehzahlbereich, d.h. auch bis zu einem mittleren Drehzahlbereich verbessert wird

Erfindungsgemäß wird diese Aufgabe durch die Merkmale des Patentanspruchs 1 gelöst. Weitere, die Erfindung ausgestaltende Merkmale sind in den Unteransprüchen enthalten.

Die mit der Erfindung hauptsächlich erzielten Vorteile sind darin zu sehen, dass durch die Steuereinrichtung, mit der im Resonanzbehälter der Resonanzquerschnitt variierbar ist und die Druckübergangsstelle, auch Übersprechstelle genannt, in der Zuführungseinrichtung die Drehmomentqualität der mit dieser Sauganlage ausgestatteten Brennkraftmaschine auch und gerade bis zu einem mittleren Drehzahlbereich vortrefflich ist. Dabei lassen sich sowohl die Steuereinrichtung wie auch die Druckübergangsstelle unter Einsatz konstruktiv übersichtlicher Maßnahmen verwirklichen., Das Schließorgan und der Dichtabschnitt können auf einfache Weise an der Steuereinrichtung bzw. der Sauganlage vorgesehen werden. Schließlich sind die schaltbaren Übersprechstellen im Aufbau einleuchtend und leicht in die Zuführungseinrichtung zu integrieren.

In der Zeichnung wird ein Ausführungsbeispiel der Erfindung gezeigt, das nachstehend näher beschrieben wird.

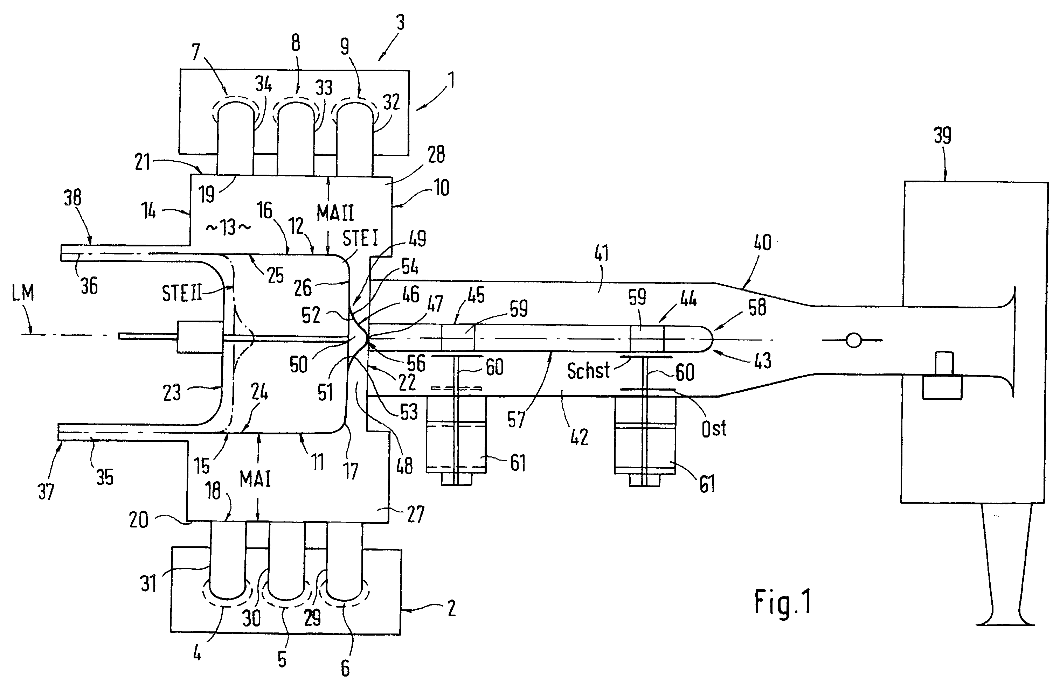

Es zeigen
- Fig.1: eine schematische Darstellung einer Brennkraftmaschine mit der erfindungsgemäßen Sauganlage,
- Fig. 2: eine Schrägansicht von oben auf die Brennkraftmaschine mit der verwirklichten Sauganlage.

Eine Brennkraftmaschine 1 umfasst gegenüberliegende Zylinderreihen 2,3, die in Boxeroder V-Form zueinander angeordnet sind, und zwar mit Abstand zu einer Mittellängsebene LM dieser Maschine. Im Ausführungsbeispiel weist jede Zylinderreihe 2,3 jeweils drei Zylinder 4,5,6 bzw. 7,8,9 auf. Zwischen den Zylinderreihen 2,3 ist eine Sauganlage 10 vorgesehen, die die Zylinder 4,5,6 und 7,8,9 mit Luft versorgt.

Die Sauganlage 10 ist mit einer Vorrichtung 11 zur Nutzung von Resonanzeffekten ausgestattet, wie sie mit Hemholtz-Resonatoren - Bosch, kraffahrtechnisches Taschenbuch, 22 Auflage,1995, Seite 379 - erzielt werden.

Die Vorrichtung 11 umfasst eine Steuereinrichtung 12, die im Innenraum 13 eines aus Metall, Kunststoff oder dergl. bestehenden Resonanzbehälters 14 der Sauganlage 10 angeordnet ist. Mit der Steuereinrichtung 12 ist der Resonanzquerschnitt im Resonanzbehälter 14 variierbar, wodurch eine definierte Drehmomentoptimierung der Brennkraftmaschine 1 verwirklichbar ist.

Die Steuereinrichtung 12, die werkstoffmäßig ähnlich ausgeführt ist wie der Resonanzbehälter 14 und weist Leitwandungen 15,16,17 auf. Die Leitwandungen 15,16 verlaufen beabstandet zu Wandungen 18,19 - MA I, MA II - des Resonanzbehälters 14. Der Resonanzbehälter 14 weist eine prismaartige Grundform auf, wobei seine Wandungen 18,19, als den Zylinderreihen 2 und 3 zugekehrte Längswandungen 20,21 ausgeführt sind. Zu den Längswandungen 20,21 erstrecken sich quer verlaufende erste und zweite Stirnwandungen 22,23. Die Leitwandungen 15,16, sind parallel zu den Längswandungen 20,21 bzw. Stirnwandungen 22,23 ausgerichtet. Die Leitwandungen 15,16,17 sind in U-Form zueinander angeordnet, und ihre Schenkelwandungen sind mit 24 und 25 bezeichnet; ihre Stegwandung mit 26.

Die Steuereinrichtung 12 ist zwischen einer ersten Endstellung STE I und einer zweiten Endstellung STE II stufenlos verstellbar ausgeführt. In der ersten Endstellung STE I ergibt sich pro Zylinderreihe 2 und 3 je ein Resonanzvolumen 27 und 28, die besagten Zylinderreihen vorgelagert sind. Der Resonanzbehälter 14 weist auf den Zylinderreihen 2 und 3 zugekehrten Seiten Rohrabschnitte 29,30,31 und 32,33,34 auf, die zu den Zylindern 4,5,6 und 7,8,9 führen. Die besagten relativ kurzen Rohrabschnitte sind Bestandteil des Resonanzbehälters 14.

Die Schenkelwandungen 24,25 der Steuereinrichtung 12 sind von Aufnahmen 35,36 des Resonanzbehälters 14 umgeben. Diese Aufnahmen 35,36 sind Verlängerungen 37,38 des Resonanzbehälters 14 und weisen einen rohrförmigen Querschnitt auf.

Die erste Stirnwandung 22 des Resonanzbehälters 14 ist mit einer einen Luftfilter 39 umfassenden Zuführungseinrichtung 40 versehen, die getrennte Zuleitungen 41 und 42 aufweist. Zwischen den Zuleitungen 41,42 sind Druckübergangsstellen 43,44 und 45 vorgesehen, die auf dem Gebiet der Akustik auch als Übersprechstellen bezeichnet werden.

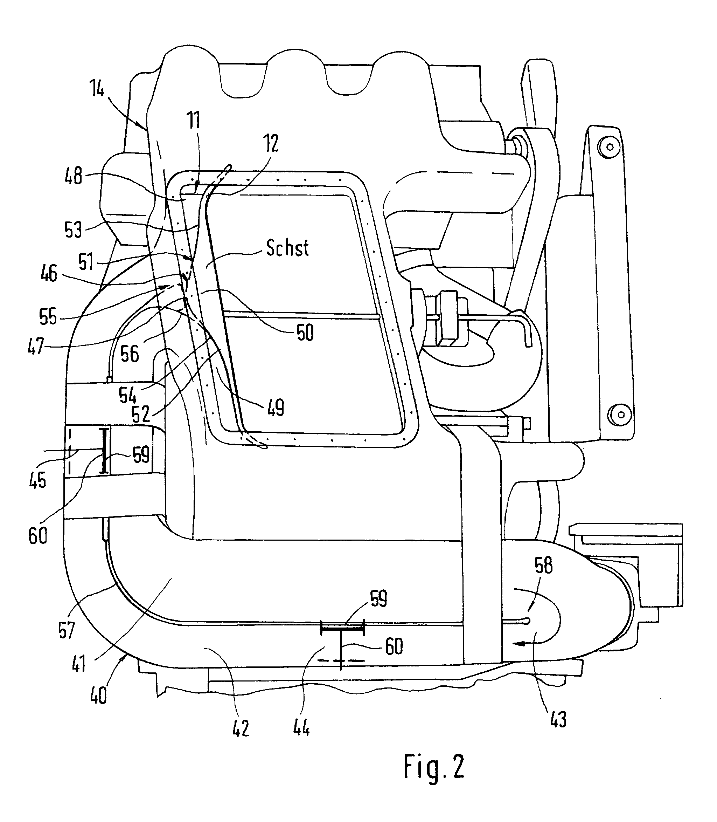

An der Stegwandung 26 der Steuereinrichtung 12 ist in der Mittellängsebene ML ein Schließorgan 46 angebracht, das in der ersten Endstellung STE I mit einem Dichtabschnitt 47 der Zuführungseinrichtung 40 zusammenwirkt. Dabei ergeben sich in der Endstellung STE I mit den Zuleitungen 41,42 getrennte Führungskanäle 48,49 für die Zylinder 4,5,6 bzw. 7,8,9. Das Schließorgan 46 wird durch ein örtliche Erweiterung 50 der Stegwandung 26 gebildet, wobei die Stegwandung 26 und die angrenzenden Schenkelwandungen 24,25 bereichsweise durch Formverläufe 51,52 Wandabschnitte 53,54 der Führungskanäle 48,49 bilden. Der Dichtabschnitt 47 ist an einer örtlichen Verdickung 55 - Fig. 2 - vorgesehen, die am der Erweiterung 50 zugekehrten Ende 56 einer Trennwand 57 zwischen den Zuleitungen 41,42 der Zuführungseinrichtung 40 angeordnet ist.

Die Druckübergangstellen 43,44,45 weisen unterschiedliche Konfigurationen auf: So sind sie als feste Druckübergangsstelle 43 und als erste schaltbare und als zweite schaltbare Druckübergangsstelle 44,45 ausgebildet. Die Zahl der Druckübergangsstellen kann rechnerisch und/oder iterativ definiert werden. Die feste Druckübergangsstelle 43 ist am entfernt vom Ende 56 der Trennwand 57 liegenden Ende 58 angebracht. Zwischen den beiden Enden 56 und 58 sind über die Länge der Zuführungseinrichtung 40 verteilt die erste schaltbare Druckübergangstelle 44 und die zweite Druckübergangsstelle 45 eingebaut. Jede schaltbare Druckübergangsstelle z.B. 44 besitzt eine Durchgangsöffnung 58 in der Trennwand 57 und ein Verschlussorgan 59. Das Verschlussorgan 60 wird bspw. mittels einer als Unterdruckverstellers 61 dargestellten Einrichtung betätigt, und zwar zwischen einer Schließstellung Schst und einer Offenstellung Ost. Denkbar sind aber auch andere Steller u.a. elektrischer Bauart. Beim Betrieb der Brennkraftmaschine 1 nimmt im Leerlauf die Steuereinrichtung 12 die Endstellung STE I ein; das Schließorgan 46 stützt sich am Dichtabschnitt 47 ab und die schaltbaren Druckübergangsstellen 44,45 sind geschlossen. Unter Volllastbedingungen der Brennkraftmaschine ist bis zu einem ersten unteren mittleren Drehzahlbereich z.B. 2000 U/min die feste Duckübergangsstelle 43 wirksam. Ab einem, etwa zweiten höheren mittleren Drehzahlbereich z.B. 2500 U/min öffnet die erste schaltbare Druckübergangsstelle 44 und ab einem dritten gesteigerten mittleren Drehzahlbereich 3500 U/min öffnet die zweite schaltbare Druckübergangsstelle 45. Nach dem zuletzt genannten Drehzahlbereich wird die Steuereinrichtung 12, die aus der Endstellung STE I in Richtung STE II bewegt wird aktiv und der Resonanzquerschnitt im Resonanzbehälter 14 variiert.

Es ist aber auch möglich in Abhängigkeit der Brennkraftmaschine 1 vom Leerlauf bis zum gesteigerten mittleren Drehzahlbereich - 3500 U/min - die erste schaltbare Übergangsstelle 44 und die zweite Übergangsstelle 45 wechselweise d.h. gemäss den vorherrschenden Druckverhältnissen zu schalten.

## Patentansprüche

1. Sauganlage (10) mit einer Vorrichtung zur Nutzung von Resonanzeffekten für eine Brennkraftmaschine mit gegenüberliegenden Zylinderreihen, (2, 3) welche Sauganlage einen Begrenzungswandungen aufweisenden Resonanzbehälter (14) umfasst, der einerseits mit der Atmosphäre und andererseits mit Zylindern der Brennkraftmaschine in Verbindung steht, wobei im Resonanzbehälter (14) die Vorrichtung als eine den Resonanzquerschnitt variierbare Steuereinrichtung vorgesehen ist, und der Resonanzbehälter mit einer getrennte Zuleitungen besitzenden Zuführungseinrichtung verbunden ist, **dadurch gekennzeichnet, dass** die Steuereinrichtung (12) vom Leerlauf bis zu einem mittleren Drehzahlbereich in einer ersten Endstellung (STE I) festgelegt ist und zusammen mit den Zuleitungen (41,42) der Zuführungseinrichtung (40) zwei die Zylinder (4,5,6 und 7,8,9) der beiden Zylinderreihen (2,3) mit Luft versorgende Führungskanäle (48,49) bilden und dass zwischen den Zuleitungen (41,42) der Zuführungseinrichtung (40) wenigstens eine Druckübergangsstelle (43,44,45) wirksam ist, wobei die Steuereinrichtung (12) oberhalb des mittleren Drehzahlbereichs von der ersten Endstellung (STE I) bis zu einer zweiten Endstellung(STE II) zur Beeinflussung des Resonanzquerschnitts betätigbar ist.

2. Sauganlage nach Anspruch 1, **dadurch gekennzeichnet, dass** die Steuereinrichtung (12) ein Schließorgan (46) aufweist, das mit einem Dichtabschnitt (47) der Zuführungseinrichtung (40) zusammenarbeitet.

3. Sauganlage nach Anspruch 2, **dadurch gekennzeichnet, dass** das Schließorgan (46) an einer Stegwand (26) der Steuereinrichtung (12) angebracht ist.

4. Sauganlage nach Anspruch 3, **dadurch gekennzeichnet, dass** das Schließorgan (46) durch eine örtliche Erweiterung (48) der Stegwand (26) der Steuereinrichtung (12) gebildet wird.

5. Sauganlage nach einem oder mehreren der vorangehenden Ansprüche, **dadurch gekennzeichnet, dass** die Stegwandung (26) mit Schenkelwandungen (24,25) verbunden ist, wobei die Stegwandung (26) und die Schenkelwandungen (24,25) zumindest bereichsweise Wandabschnitte der Führungskanäle (48,49) bilden.

6. Sauganlage nach Anspruch 2, **dadurch gekennzeichnet, dass** der Dichtabschnitt (47) an einer örtlichen Verdickung (55) zwischen den Zuleitungen (41,42) der Zuführungseinrichtung (40) vorgesehen ist.

7. Sauganlage nach Anspruch 1, **dadurch gekennzeichnet, dass** in der Zuführungseinrichtung (40) schaltbare Druckübergangsstellen (44,45) vorgesehen sind.

8. Sauganlage nach Anspruch 7, **dadurch gekennzeichnet, dass** jede schaltbare Druckübergangsstelle (z.B. 44) eine Durchgangsöffnung (59) in einer Trennwand (57) zwischen den Zuleitungen (41,42) der Zuführungseinrichtung (40) aufweist, welche Durchgangsöffnung (59) mit einem Verschlussorgan (60) zusammenwirkt.

9. Sauganlage nach Anspruch 8, **dadurch gekennzeichnet, dass** das Verschlussorgan (60) mittels einer Einrichtung in eine Schließstellung (Schst) und eine Offenstellung (Ost) bewegbar ist.

10. Sauganlage nach einem oder mehreren der vorangehenden Ansprüche **dadurch gekennzeichnet, dass** über die Länge der Zuführungseinrichtung (40) verteilt drei Druckübergangsstellen (43,44,45) vorgesehen sind, wovon eine als feste Druckübergangsstelle (43) wirkt und zwei als erste schaltbare Druckübergangsstellen (44) und als zweite Druckübergangsstelle (44) ausgeführt sind.

11. Sauganlage nach Anspruch 10, **dadurch gekennzeichnet, dass** die Druckübergangsstellen (43,44,45) in Abhängigkeit der Drehzahl der Brennkraftmaschine (1) wirksam sind, dergestalt, dass in einem ersten unteren mittleren Drehzahlbereich die feste Übergangsstelle (43), in einem zweiten höheren mittleren Drehzahlbereich die erste schaltbare Druckübergangsstelle (44) und in einem dritten gesteigerten mittleren Drehzahlbereich die zweite schaltbare Druckübergangsstelle (45) wirkt.

12. Sauganlage nach Anspruch 10, **dadurch gekennzeichnet, dass** die erste und die zweite schaltbare Übergangsstelle (43 und 44) bis zu einem mittleren Drehzahlbereich der Brennkraftmaschine (1) wechselweise geschaltet werden.

## Claims

1. An intake system (10) with a device for utilizing resonance effects for an intemal-combustion engine with opposed rows of cylinders (2, 3), which intake system comprises a resonance container (14) which has boundary walls and which is connected on one side to the atmosphere and on the other side to cylinders of the internal-combustion engine, wherein the device is provided as a control device [capable of] varying the resonance cross-section in the resonance container (14), and the resonance container is connected to a supply device provided with separate supply lines, **characterized in that** from idling until an average rotational-speed range the control device (12) is set in a first end position (**STE I**) and together with the supply lines (41, 42) of the supply device (40) form two guide ducts (48, 49) which supply the cylinders (4, 5, 6 and 7, 8, 9) of the two cylinder rows (2, 3) with air, and at least one pressure-transition point (43, 44, 45) is active between the supply lines (41, 42) of the supply device (40), wherein the control device (12) is actuable above the average rotational-speed range from the first end position (**STE I**) as far as a second end position (**STE II**) in order to influence the resonance cross-section.

2. An intake system according to Claim 1, **characterized in that** the control device (12) has a closure member (46) which co-operates with a sealing portion (47) of the supply device (40).

3. An intake system according to Claim 2, **characterized in that** the closure member (46) is attached to a web wall (26) of the control device (12).

4. An intake system according to Claim 3, **characterized in that** the closure member (46) is formed by a local enlargement (48) of the web wall (26) of the control device (12).

5. An intake system according to one or more of the preceding Claims, **characterized in that** the web wall (26) is connected to limb walls (24, 25), wherein the web wall (26) and the limb walls (24, 25) form the wall portions of the guide ducts (48, 49) at least in part.

6. An intake system according to Claim 2, **characterized in that** the sealing portion (47) is provided at a local thickened portion (55) between the supply lines (41, 42) of the supply device (40).

7. An intake system according to Claim 1, **characterized in that** engageable pressure-transition points (44, 45) are provided in the supply device (40).

8. An intake system according to Claim 7, **characterized in that** each engageable pressure-transition point (e.g. 44) has a through-opening (59) in a partition wall (57) between the supply lines (41, 42) of the supply device (40), the through-opening (59) co-operating with a closure member (60).

9. An intake system according to Claim 8, **characterized in that** the closure member (60) is movable by means of a device into a closed position (Schst) and into an open position (Ost).

10. An intake system according to one or more of the preceding Claims, **characterized in that** three pressure-transition points (43, 44, 45), of which one acts as a fixed pressure-transition point (43) and two are constructed in the form of first engageable pressure-transition points (44) and in the form of a second pressure-transition point (44), are provided distributed over the length of the supply device (40).

11. An intake system according to Claim 10, **characterized in that** the pressure-transition points (43, 44, 45) are active in a manner dependent upon the rotational speed of the internal-combustion engine, in such a way that the fixed transition point (43) is active in a first lower average rotational-speed range, the first engageable pressure-transition point (44) is active in a second higher average rotational-speed range and the second engageable pressure-transition point (45) is active in a third increased average rotational-speed range.

12. An intake system according to Claim 10, **characterized in that** the first and the second engageable transition points (43 and 44) are engaged in an alternating manner as far as an average rotational-speed range of the internal-combustion engine (1).

## Revendications

1. Système d'admission (10) comportant un dispositif pour l'exploitation des effets de résonance pour un moteur à combustion interne avec des rangées de cylindres (2, 3) figurant face à face, ledit système d'admission comprenant un récipient de résonance (14) présentant un cloisonnement de délimitation qui, d'un côté, est relié à l'atmosphère, et, de l'autre côté, avec des cylindres du moteur à combustion interne, où, dans le récipient de résonance (14), le dispositif est prévu en tant que dispositif de commande faisant varier la section droite de résonance, et le récipient de résonance est relié avec un dispositif d'alimentation possédant des canalisations d'amené séparées, **caractérisé en ce que**, le dispositif de commande (12), du fonctionnement à vide jusqu'à une plage moyenne de vitesses de rotation, est défini en une première position finale (STE I) et, ensemble avec les canalisations d'amené (41, 42) du dispositif d'alimentation (40), forment deux canaux de conduite (48, 49) alimentant en air les cylindres (4, 5, 6 et 7, 8, 9) des deux rangées de cylindres (2, 3) et que, entre les canalisations d'amené (41, 42) du dispositif d'alimentation (40), au moins une zone de transition de pression (43, 44, 45) est en fonction, le dispositif de commande (12) pouvant être actionné au-dessus de la plage moyenne de vitesses de rotation de la première position finale (STE I) jusqu'à une deuxième position finale (STE II) pour influer sur la section droite de résonance.

2. Système d'admission selon la revendication 1, **caractérisé en ce que** le dispositif de commande (12) présente un organe de fermeture (46) qui travaille conjointement avec une section d'étanchéité (47) du dispositif d'alimentation (40).

3. Système d'admission selon la revendication 2, **caractérisé en ce que** l'organe de fermeture (46) est monté en une cloison de base (26) du dispositif de commande (12).

4. Système d'admission selon la revendication 3, **caractérisé en ce que** l'organe de fermeture (46) est formé par une extension locale de la cloison de base (26) du dispositif de commande (12).

5. Système d'admission selon l'une ou plusieurs des précédentes revendications, **caractérisé en ce que** le cloisonnement de base (26) est relié avec des cloisonnements en branche (24, 25), le cloisonnement de base (26) et les cloisonnements en branche (24, 25) formant au moins par zone des sections de paroi des canaux de conduite (48, 49).

6. Système d'admission selon la revendication 2, **caractérisé en ce que** la section d'étanchéité (47) est prévue en une surépaisseur locale (55) entre les canalisations d'amené (41, 42) du dispositif d'alimentation (40).

7. Système d'admission selon la revendication 1, **caractérisé en ce que** dans le dispositif d'alimentation (40), des zones de transition de pression connectables (44, 45) sont prévues.

8. Système d'admission selon la revendication 7, **caractérisé en ce que** chaque zone de transition de pression connectable (par exemple 44) présente une ouverture de traversée (59) dans une paroi de séparation (57) entre les canalisations d'amené (41, 42) du dispositif d'alimentation (40), lesdites ouvertures de traversée (59) fonctionnant conjointement avec un organe de fermeture (60).

9. Système d'admission selon la revendication 8, **caractérisé en ce que**, l'organe de fermeture (60) peut être déplacé en une position fermé (Schst) et une position ouvert (Ost).

10. Système d'admission selon l'une ou plusieurs des précédentes revendications, **caractérisé en ce que** trois zones de transition de pression (43, 44, 45) réparties sur la longueur du dispositif d'alimentation (40) sont prévues, dont l'une en tant que zone de transition de pression fixe (43) et deux sont réalisées en tant que première zone de transition de pression connectable (44) et deuxième zone de transition de pression connectable (45).

11. Système d'admission selon la revendication 10, **caractérisé en ce que** les zones de transition de pression (43, 44, 45) sont en fonction selon la vitesse de rotation du moteur à combustion interne (1), de manière telle que dans une première plage moyenne inférieure de vitesses de rotation, la première zone de transition fixe (43) est en fonction, dans une deuxième plage moyenne supérieure de vitesses de rotation, la première zone de transition de pression connectable (44), et dans une troisième plage moyenne augmentée de vitesses de rotation, la deuxième zone de transition de pression connectable (45).

12. Système d'admission selon la revendication 10, **caractérisé en ce que** la première et la deuxième zone de transition de pression connectable (44 et 45) sont commutées en alternance jusqu'à une plage moyenne de vitesses de rotation du moteur à combustion interne (1).
